# EUROPEAN PATENT APPLICATION

(11) **EP 2 216 431 A1**
(43) Date of publication of application: **11.08.2010**
(21) Application number: 08853864.0
(22) Date of filing: 25.11.2008
(51) Int. Cl.: D01F 9/17, B05B 7/06, D01D 5/14

(54) **METHOD FOR THE AMBIENT-TEMPERATURE PRODUCTION OF MICRO- AND NANO-FIBRES OF LIGNIN AND OTHER RESINOUS COMPOUNDS**

(30) Priority: 27.11.2007 ES 200703205
(71) Applicant: Universidad de Sevilla, 41013 Sevilla (ES); Universidad De Málaga, Edf. Institutos Universitarios (ES)
(72) Inventor: LALLAVE RIVAS, Manuel, E-41092 Sevilla (ES); CORDERO ALCÁNTARA, Tomás, E-29071 Málaga (ES); RODRÍGUEZ MIRASOL, José, E-29071 Málaga (ES); GONZÁLEZ LOSCERTALES, Ignacio, E-29071 Málaga (ES); BARRERO RIPOLL, Antonio, E-41092 Sevilla (ES)
(74) Representative: Temino Ceniceros, Ignacio
(86) International application number: PCT/ES2008/000737
(87) International publication number: WO 2009/068711

(57) **Abstract**

The invention relates to a method enabling the ambient-temperature spinning of ligning originating from Alcell- and Organosolv-type extraction processes. The invention also relates to a method and device for the ambient-temperature production of lignin fibres of micro- and nanometric diameter, by means of electrospinning and co-electrospinning. The resulting fibres can be single strand (electrospinning) and hollow or coaxial (co-electrospinning) fibres. The lignin fibres are transformed into carbon nanofibres after a suitable heat treatment.

## Description

### OBJECT OF THE INVENTION

The invention refers to a procedure for manufacturing at ambient temperature lignin micro and nanofibres from lignin and other resinous compounds without adding polymers (binders) which imply considerable expense for the spinning process. The aim of the invention is the manufacture of carbon fibres using a heat treatment of the lignin fibres obtained by means of the procedure herein described. There are two types of commercial carbon fibres which, as is well known, are of great importance for industry and technology due to their chemical, electrical, magnetic and mechanical properties. These are: the so-called high performance fibres characterised by excellent mechanical performance (aerospace industry and others) and general purpose fibres, characterised by their high specific surface values (activated carbon, substrata for catalytic applications, gas storage, absorption, etc.). The procedure claimed herein is aimed at the manufacture of the latter. Likewise an object of the present invention is the device claimed herein for the manufacture at ambient temperature of lignin micro and nanofibres, using the co-electrospinning technique.

With regard to their structure, once treated thermally, they give rise to so-called general purpose carbon fibres and the fibres obtained can be single or hollow, although they can also be of the coaxial type, in which the lignin material coaxially coats another different material which can either be of the polymer or ceramic type. The fibres can likewise be doped with catalytic particles, or incorporate other materials whose purpose is to modify the end structure and the properties of the carbon fibres obtained from the lignin fibres.

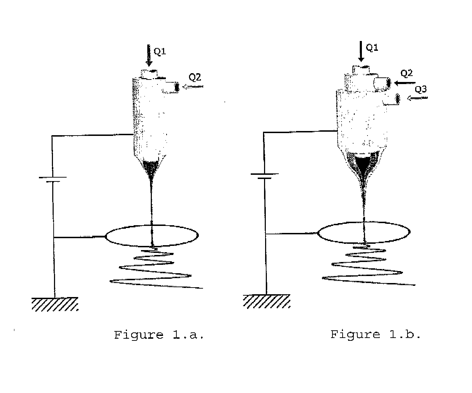

Before obtaining the lignin fibres, the lignin must be prepared in solution form so that it can be spun at room temperature. This is done by means of the procedure claimed herein. Subsequently, to obtain the micro and nanometre-sized fibres, the lignin solution must be forced through the device illustrated in figure 1.a., likewise the object of the invention, which, by means of electrohydrodynamic and surface tension forces, is capable of generating a jet of two liquids which flow coaxially, so that the lignin solution is surrounded by another, easily evaporable, liquid whose purpose is to delay the evaporation of the lignin solvent, which would result in the solidification of the latter before the fibres are able to form. Once the liquid that flows on the outside has evaporated, the solvent present in the lignin solution starts to evaporate and quickly leads to the solidification of the lignin flow which gives rise to the lignin fibres.

When you wish to manufacture hollow or coaxial fibres (lignin coating a different material), you will need to form a triple coaxial jet (made up of three liquids) by using the device in figure 1. B, so that the lignin solution flows between an inner liquid, which it surrounds, and the other outer liquid, the evaporable liquid, which surrounds it. Depending on its nature, the innermost liquid may serve different purposes. For example, if this liquid is inert (in the sense that it fails to solidify during the fibre formation process) hollow nanofibres are obtained once the inert liquid spontaneously leaves the inside of the fibres (or it is removed b y means of an appropriate process). On the contrary, if the liquid which flows through the inside is liable to solidify in a time similar to the time it takes for the lignin to solidify, coaxial fibres are obtained in which the inner material is surrounded by a layer of lignin.

### STATE OF THE ART

The carbon fibres are of extraordinary importance due to their wide variety of applications in the field of materials engineering. Among them, worthy of particular mention is their use in catalysis, in adsorption and absorption beds, in fuel cell electrodes, in gas storage, nanoelectronics and compound materials, in separation processes and any other application requiring materials with a very high specific surface area.

The process for manufacturing carbon fibres requires the spinning of precursor fibres which are transformed into carbon fibres following the appropriate heat treatment.

The spinning of the precursor fibres requires their extrusion in the liquid state which, to date, has been carried out by means of precursor temperature melting; this process is known as melt-extrusion or melt-spinning. Once the precursor fibres have been manufactured, they are subjected to a heat treatment to stabilise and subsequently carbonise them in order to ultimately produce carbon fibres. The minimum diameter of these carbon fibres is typically approximately 10 mm. Nowadays, fossil fuel precursors are most often used (E. Mora, C. Blanco, V. Prada, R. Santamaria, M. Granda, R. Menéndez, Carbon 2002, 40, 2719-2725; P.J. Walsh, ASM Handbook 2001, vol. 21, Composites) due, in the main, to their low cost compared with that of other polymer-type precursors, such as polyacrylonitrile (PAN), which is the precursor most often used to produce carbon fibres (P.J. Goodhew, A.J. Clarke, J.E. Bailey, Material Science & Engineering 1975, 17, 3-30). It is worth mentioning that, unlike what occurs with many precursors, the PAN can be spun into fibres at ambient temperature, and does not require the use of melt-spinning. Recently, other renewable sources or recycled materials have been considered as possible precursors for the manufacture of carbon fibres (W.M. Qiao, M. Huda, Y. Song, S.-H Yoon, Y. Korai, I. Mochida, Energy & Fuels 2005, 19, 2576-2582).

A low cost precursor for the production of general purpose carbon fibres is lignin. Lignin is the second most abundant polymer in nature after cellulose. This heterogeneous and aromatic bio-macromolecule (phenolic) of natural origin is found on cell walls in plants, and is an underused type of waste from the paper industry (J. H. Lora, W.G. Glassner, Journal of Polymers and the Environment 2002, 10, Nos.1/2 April). Although, in principle, lignin itself cannot be spun in order to obtain fibres, Kubo and collaborators (S. Kubo, Y. Uraki and Y. Sano, Carbon 1998, 36, No. 7-8, pp. 1119-1124) have reported the use of lignin as a precursor for carbon fibres. In order to obtain lignin fibres, these authors proposed the conversion of lignin into functional polymers by means of an appropriate method for separating timber. The fibres obtained by melt extrusion of the precursor can be subsequently carbonised, following heat stabilisation, in order to obtain carbon fibres. Unfortunately, though the price of lignin is practically nil, the conversion process of lignin into a spinnable material is costly.

Other groups have recently reported the use of mixtures of lignin with other polymers (binders) which are capable of producing fibres by heat extrusion; the latter can be carbonised following the appropriate stabilisation in order to produce carbon fibres (S. Kubo and J.F. Kadla, Macromolecules 2004, 37, 6904-6911, J.F. Kadia, S. Kubo, R.A. Venditti, R.D. Gilbert, A.L. Compere, W. Griffith, Carbon 2002, 40 2913-2920, S. Kubo, J.F. Kadla, Journal of Polymers and the Environment 2005, 13, No. 2 April, J.F. Kadla, S. Kubo, Composites: Part A 2004, 35 395-400). The diameter of these carbon fibres varies between 30 and 80 microns and, due to the limitations of the melt extrusion process (blocking of the nozzles), it is difficult to reduce the diameter of the fibres to below the indicated values. Here too, the cost of the process rises considerably due to the high cost of the polymers used in the mixtures.

As mentioned above, polyacrylonitrile (PAN) is likewise used as a precursor to produce fibres at ambient temperature using the electrospinning technique (I. Chun, D.H. Reneker, H. Fong, X. Fang, J. Deitzel, N.C.B. Tan, K. Kearns, J. of Adv. Materials 1999, 31, 36; S.Y. Gu, J. Ren, Q.L. Wu, Synthetic Metals 2005, 155, 157-161). Following the appropriate stabilisation and subsequent carbonisation, carbon fibres are obtained. However, the high cost of the precursor polymer limits the generalised use of this process.

Finding a procedure which would allow the spinning at ambient temperature of lignin and other highly contaminating organic waste for its transformation into high added-value carbon micro and nanofibres would be of enormous interest due to the environmental benefits and due to the reduction in the cost of the nanofibres manufacturing process.

### DETAILED DESCRIPTION OF THE INVENTION

The present invention claims a simple method for spinning at ambient temperature, and without the addition of polymers, carbon fibre precursors such as lignin, tar and other derivatives of the pyrolis of natural organic waste, and resins of natural origin.

In order to transform these precursors, e.g. lignin, into substances that can be spun, a lignin mass is poured into an appropriate volume of solvent, such as ethanol, previously heated to temperatures below boiling point as, in general, it is not possible to obtain a viscous solution of lignin by direct dissolution at ambient temperature. The solvent is stirred while the mass is being poured; the proportion of precursor to solvent, for example, lignin to ethanol, can vary between 10% and 90% in mass. The dissolution thus obtained is heated at constant volume, and long enough to dissolve possible precursor agglomerates existing in the mixture. Once the process has terminated, the dissolution is left to cool, at constant volume, to ambient temperature. The range of the viscosity of the solution can vary greatly depending on the final concentration of lignin in ethanol. The concentration of lignin should be the appropriate one for the dissolution to be spun. In general, the concentrations of the precursor in the dissolution must be high enough to obtain the molecular interlinking necessary to be able to obtain the fibres, but their value depends on the morphology and size of the macromolecules making up the precursor used (S. L. Shenoy, W.D. Bates, H.L. Frisch and G.E. Wnek, Polymer, 46, Issue 10 (2005) 3372 -3384).

To be precise, in order to prepare a lignin solution suitable for making lignin nanofibres and nanotubes from Alcell lignin, at ambient temperature, the latter is dissolved in ethanol previously heated to a temperature of approximately 80°C. An Alcell lignin mass equivalent to 40-50% of an initial ethanol mass is poured into the same; the dissolution is stirred constantly during the pouring process. Once the specified quantity of lignin has been poured, the recipient is hermetically sealed and heated to 120°C for 10 minutes with an aim to dissolving any possible lignin agglomerates. Subsequently the solution is left to cool to ambient temperature.

As has already been mentioned, this process can be used for all kinds of resins of vegetable origin and derivatives of the pyrolysis of natural organic waste in order to obtain fibres of these compounds at ambient temperatures, by simply adapting the rheology of the dissolution (W.M. Qiao, M. Huda, Y. Song, S.H. Yoon, Y. Korai, I. Mochida, Energy & Fuels, 2005, 19, 2576-2582; C. Yoshida, K. Okabe, T. Yao, N. Shiraishi, A. Oya, Journal of Materials Science 2005, 40, 335-339).

Another claim of this invention is the use of the method described in PCT-027111878.5 for the electrohydrodynamic spinning of the dissolutions prepared according to the procedure described in the present invention. In order to obtain the lignin nanofibres according to method PCT-027111878.5, two capillary needles are placed coaxially as illustrated in Figure 1.a. A dissolution of lignin in ethanol prepared according to the method claimed herein is made to flow along the inner needle. When the appropriate electrical field is applied, the meniscus that appears at the top of the inner capillary has a conical shape, the Taylor cone, and a tin jet emanates from its tip, subsequently evolving into the nanofibres.

However, due to the large concentration of precursor in the dissolution, it was observed that a minimum evaporation of the solvent leads to the solidification of the conical meniscus, which prevents the electrospinning operation. In order to avoid the solidification of the Taylor cone, claimed herein is the use of a solvent flow, typically ethanol, flowing through the annular space between the two needles: a layer of solvent is thus formed and surrounds the Taylor cone formed by the lignin dissolution and the jet emanating from its tip, thus forming a coaxial jet made up of the lignin dissolution and the ethanol surrounding it. The ethanol layer gradually evaporates while the coaxial jet flows downwards, with the result that, once the ethanol layer has disappeared, the evaporation of the solvent leads to the solidification of the lignin and the formation of fibres of this material which are collected in the earth electrode. For the case of lignin, and depending on the ambient conditions and the concentration of lignin in the dissolution, the ethanol flow between the two needles oscillates between 1% and 50% of the flow of the lignin dissolution.

The viscosity of the dissolution can vary over a wide range of values depending on the concentration of lignin in the dissolution and, consequently, its behaviour as a result of the action of the electrohydrodynamic forces can differ greatly. For example, when the concentration of lignin in ethanol is typically lower than 40%, the dissolution breaks up into an electrospray, with the result that the coaxial jet breaks up into droplets, due to varicose instabilities, before forming fibres and substantially spherical lignin micro or nanoparticles are obtained with micrometric or submicron diameters. For larger concentrations (greater viscosity), the stability of the jet with respect to varicose perturbations increases, and fibres with micro and nanometric diameters are obtained; the diameter of the fibres increases with the concentration of lignin. The formation process of lignin fibres is interrupted and it is not possible to obtain fibres in the stationary state when the viscosity of the dissolution is so high that the electrohydrodynamic forces are incapable of deforming the meniscus and forming the jet; this maximum value of lignin concentration depends to a slight degree on the ambient conditions and their typical value is around 60%.

Apart from ethanol, other simple organic compounds or mixtures of the same can be used to dissolve the lignin in order to adjust the viscose properties and the volatility of the solution. The preparation process of solutions already described can use any other type of lignin extracted with organic solvents (Organosolv lignins) as a precursor, these same solvents being used to return the lignin to its viscose state. Other resins of vegetable origin can be adapted using an organic solvent for its processing into fibres by electrospinning according to the procedure described (W.M. Qiao, M. Huda, Y. Song, S.-H. Yoon, Y. Korai and I. Mochida, Energy & Fuels, 19, (2005) 2576-2582). Resinous waste obtained from the processing of organic material can be used in the same way as the lignin, by adapting its rheology using physicochemical processes. For example, by means of the liquefaction of biomass (C. Yoshida, K. Okabe, T. Yao, N. Shirashi, A. Oya, Journal of Materials Science 40, (2005), 335-339), resins with a high molecular weight suitable for electrospinning can be obtained.

The procedure described in PCT-027111878.5 can, likewise, be used with precursor dissolutions claimed herein in order to generate hollow lignin nanofibres from lignin or other resinous compounds. In this case, an injector like the one described in figure 1.b. consisting of three capillary needles placed concentrically needs to be used. An inert liquid which does not change stages during the process is injected through the innermost needle and acts as a mould for the manufacture of hollow nanofibres. The dissolution with the precursor flows through the space between the two innermost needles and the application of an appropriate electrical field gives rise to the formation of a conical meniscus, the Taylor cone, which contains the meniscus of the inert liquid in its interior. To avoid the solidification of the Taylor cone, the solvent is injected through the outermost conduit resulting in an electrified meniscus with a structure in which the meniscus of the dissolution surrounds another internal (inert) one and is in turn surrounded by another which prevents its evaporation. The tips of the three menisci issue jets which, further on, form an electrified coaxial jet where the dissolution of the precursor flows between the solvent and the mould-liquid (inert). Once the solvent layer evaporates, the dissolution of the precursor solidifies, thus forming fibres with a central nucleus of the inert liquid which is gathered in the collector electrode; following the spontaneous exit of the inert liquid from the interior of the fibre, the fibres are transformed into hollow fibres or tubes. Finally, following the appropriate heat treatment, the precursor fibres or tubes are transformed respectively into carbon fibres or tubes.

If a material liable to solidifying during the process (polymers, sol-gel, etc.) flows through the innermost conduit of figure 1.b., instead of an inert liquid, the resulting product would be coaxial fibres in which a lignin fibre (or a fibre of the precursor used) contains another fibre made of polymer or another ceramic material in its interior.

### BRIEF DESCRIPTION OF THE DRAWINGS

Figure la. The concentric needles are exposed to an electrical field, facing a polarity electrode opposite that of the needles. At the end of needle 1, with Q1 flow, the liquid meniscus of the lignin solution is coated with the ethanol injected by needle 2, with Q2 flow. At this point, the electrical voltage established between needle 2 and the collector electrode increases through a high voltage source until both menisci start to deform into the almost conical shape. When the voltage is high enough, a thin jet emanates from the tip of the cone formed by the lignin flow which will be collected in the opposite electrode in the shape of a micro-nanofibre.

Figure 1b. It illustrates a device made up of three concentric needles for the preparation of hollow or coaxial lignin nanofibres. At the end of needle 2, with Q2 flow, the liquid meniscus of the lignin solution is coated with the ethanol injected by needle 3, with Q3 flow. Q1 flow of liquid which is lignin immiscible or only slightly miscible with lignin is injected through needle 1. At this point, the electrical voltage established between needle 3 and the collector electrode increases through a high voltage source until the three menisci start to deform into an almost conical shape. When the voltage is high enough, a thin coaxial jet of lignin solution surrounding fluid 1 emanates from the tip of the coaxial cone made up of the lignin fluid which surrounds the meniscus of fluid 1, and will be collected in the opposite electrode in the shape of a coaxial micro-nanofibre. If fluid 1 does not solidify during the time of flight, then the fibres collected will be lignin coaxial fibres surrounding the solidified fluid 1.

## Claims

1. A procedure for the preparation of dissolutions of lignin extracted by the method known as Alcell suitable for the manufacture at ambient temperatures of lignin fibres, **characterised** because it consists in the dissolution of the lignin in an appropriate solvent, preferably ethanol, where the proportion of lignin in the dissolution varies between 10% and 90% in mass of the solvent mass, in such a way that the solution thus obtained is heated, at constant volume, and long enough to dissolve possible precursor agglomerates in the mixture and is subsequently left to cool, at constant volume, until it reaches ambient temperature.

2. A procedure according to claim 1 to prepare dissolutions of lignin extracted by methods other than Alcell, **characterised** because they use organic solvents, preferably alcohols, organic acids (formic acid and acetic acid), phenol, cresols, ethyl acetate, amines and their oxides, ketones, dioxane and DMSO in solvents suitable for the manufacture at ambient temperature of lignin fibres where the proportion of lignin in the dissolution varies between 10% and 90% in mass of the mass of the solvent, in such a way that the dissolution thus obtained is heated, at a constant volume, for long enough to dissolve any possible precursor agglomerates existing in the mixture, and subsequently left to cool, at constant volume, until it reaches ambient temperature.

3. A procedure for the preparation of dissolutions of precursors obtained from biomass using different methods such as pyrolysis or liquefaction according to claim 1, **characterised** because its direct dissolution in appropriate solvents, or following condensation, allow for the spinning at ambient temperature of the precursor.

4. A procedure according to claims 1 to 3 **characterised** because the lignin dissolution is doped with catalytic particles or other nanostructured materials to modify the properties of the carbon fibres obtained from the heat treatment of lignin fibres.

5. A procedure to produce fibres with micro and nanometric diameter of dissolutions of carbon precursors obtained by means of claims 1 to 4 **characterised** because
• the precursor dissolution is forced through a capillary tube located inside another concentric capillary tube,
• an appropriate solvent is forced through the annular space existing between the two tubes
• on applying a difference in electrical potential between the two capillary tubes (connected to the same potential) and a reference electrode, an electrified meniscus is formed consisting of a conical meniscus of the precursor solution and layer of solvent surrounding it.
• downstream from the electrified meniscus a coaxial jet is formed which consists of the jet of the dissolution surrounded by the layer of solvent.
• the distance between the end of the inner capillary and the reference electrode varies between 1 mm and 1 m., the difference in potential applied between both electrodes varies between 1V and 100 kV, the flows of dissolution and solvent running through the capillaries are between 0.001 ml/hr and 10000 ml/hr and the diameter of the coaxial jet is between 900 microns and 5 nanometers.

6. A procedure to produce hollow fibres with a micro and nanometric diameter from carbon precursor solutions obtained according to claims 1 to 4, **characterised** because:
• the precursor solution is forced through the intermediate annular space left by the three capillary tubes placed concentrically
• an inert liquid which does not change stages during the process is forced through the innermost tube
• an appropriate volatile solvent is forced through the annular space existing between the two outermost tubes,
• on applying a difference in potential between the capillary tubes (connected to the same potential) and a reference electrode, an electrified meniscus is formed with a structure in which the conical meniscus of the precursor solution is surrounded by a layer of solvent which contains the meniscus of inert liquid in its interior.
• the jets emanating from the tips of the menisci give rise to a coaxial jet of three liquids in which the precursor dissolution surrounds the inert liquid and is, in turn, surrounded by a layer of solvent,
• the distance between the end of the inner capillary and the reference electrode varies between 1 mm and 1m.
• the difference in potential applied between both electrodes varies between 1V and 100 kV.
• the flows of the dissolution and the solvent which run through the capillary tubes are between 0.001 ml/hr and 10000 ml/hr.
• the diameter of the coaxial jet is between 900 microns and 5 nanometers.

7. A procedure to produce coaxial fibres, with a micro and nanometric diameter, from carbon precursor dissolutions obtained in accordance with claims 1 to 3 consisting in the procedure of claim 5 **characterised** because the inert liquid is replaced by another (polymer, sol-gel, etc.) capable of solidifying, so that coaxial fibres formed by a polymer or ceramic material surrounded by a layer of lignin are obtained.
